# EUROPÄISCHE PATENTSCHRIFT

(11) **EP 1 698 996 B1**
(45) Veröffentlichungstag und Bekanntmachung des Hinweises auf die Patenterteilung: **26.12.2007**
(21) Anmeldenummer: 05028466.0
(22) Anmeldetag: 24.12.2005
(51) Int. Cl.: G06K 7/10

(54) **Identifikationseinrichtung**
Identification device
Dispositif d'identification

(30) Priorität: 01.03.2005 DE 102005009308
(43) Veröffentlichungstag der Anmeldung: 06.09.2006
(73) Patentinhaber: SICK AG, 79183 Waldkirch (DE)
(72) Erfinder: Nübling, Ralf Ulrich, 79211 Denzlingen (DE)
(74) Vertreter: Ludewigt, Christoph

(56) Entgegenhaltungen:
- US-A- 5 872 354
- US-B1- 6 801 260

## Beschreibung

Die Erfindung betrifft eine ldentifikationseinrichtung, insbesondere einen Codeleser, zur Erfassung von in unterschiedlichem Abstand angeordneten ein- und/oder zweidimensionalen Codes. Dafür sind in einem Gehäuse ein ortsauflösender Lichtempfänger und einer diesem zugeordneten ebenfalls im Gehäuse eingebauten Abbildungsoptik angeordnet.

Bei den aus dem Stand der Technik bekannten Identifikationseinrichtungen wird von der Abbildungsoptik in einer Bildebene ein Abbild von einem in der Objektebene vorhandenen Code entworfen. In dieser Bildebene befindet sich der ortsauflösende Lichtempfänger, bei welchem mehrere Lichtempfängerpixel zeilen- oder matrixförmig angeordnet sind.

Die im Code und demzufolge auch im Abbild des Codes vorhandenen unterschiedlichen Kontraste erzeugen in den einzelnen Lichtempfängerpixeln unterschiedliche Photoströme, aus denen dann über eine Signalverarbeitung der Codeinhalt identifizierbar ist.

Derartige Codierungen werden in vielseitigen Anwendungsgebieten eingesetzt, so zum Beispiel zur Identifizierung und Steuerung einzelner Objekte in der Fördertechnik. Dabei ist der Code nicht auf eine bestimme Codeart beschränkt, sondern umfasst alle, mit einer Bildverarbeitungseinrichtung erkennbaren Varianten von Informationsträgern.

Von leistungsfähigen ldentifikationseinrichtungen wird heute erwartet, dass immer größere Informationsmengen auf möglichst kleinen Codeflächen gelesen werden können. Dies bedeutet, dass von der Identifikationseinrichtung eine hohe Ortsauflösung gefordert wird. Insbesondere dann, wenn sich der Code noch zusätzlich innerhalb eines großen Tiefenmessbereiches befindet, sind an die Identifikationseinrichtung hohe Anforderungen gestellt. Eine weitere Anforderung an leistungsstarke Identifikationseinrichtungen besteht in der hohen Lesegüte, welche unter anderem auch eine lichtstarke Abbildungsoptik erforderlich macht. Diese beiden Bedingungen, d. h. großer Tiefenmessbereich und gleichzeitig lichtstarke Abbildungsoptik setzen voraus, dass die ldentifikationseinrichtung mit einer automatischen Entfernungseinstellung ausgerüstet sein muss.

Bei diesen bekannten automatischen Entfernungseinstellungen werden die unterschiedlichen Objektabstände durch Anpassung der optischen Bildschnittweite, d. h. durch Veränderung des Abstandes zwischen Abbildungsoptik und dem ortsauflösenden Lichtempfänger ausgeglichen.

Dazu wird meist die gesamte Empfangsoptik in Richtung der optischen Achse bewegt werden, während der ortsauflösende Lichtempfänger stationär im Gehäuse positioniert ist. Üblicherweise wird dazu mit Hilfe eines Servomotors die in einer Gewindefassung montierte Abbildungsoptik durch Drehung um die optische Achse innerhalb einer mit Gewindesteigung versehenen Buchse verschoben. Insbesondere bei kontinuierlichem Einsatz über einen längeren Zeitraum hinweg - über die Lebensdauer einer Identifikationseinrichtung betrachtet, kann dies im Bereich von 10⁷ bis 10⁹ Zyklen liegen - stoßen derartige Lösungen, aufgrund der auftretenden Belastungen im Bereich der mechanischen Lagerungen bzw. der Gleitflächen, an ihre Grenzen. Darüber hinaus benötigt dieser Fokussiervorgang in der Regel auch viel Zeit und ist deshalb nicht in der Lage, auf schnell wechselnde Codeabstände zu reagieren.

Aus der US 6,801,260 ist eine Vorrichtung bekannt, bei der ein verstellbarer Umlenkspiegel zwischen einer ortsfesten Abbildungsoptik und einem ebenfalls ortsfesten Lichtempfänger angeordnet ist. Dieser Umlenkspiegel wird entweder parallel verschoben oder gekippt und dabei auch noch gleichzeitig in seinem Abstand zur Abbildungsoptik verändert. Auf diese Weise wird zur Anpassung an verschiedene Objektabstände die bildseitige Schnittweite so verändert, dass Objekte mit unterschiedlichem Objektabstand immer scharf auf dem ortsauflösenden Lichtempfänger abgebildet werden.

Bei einer reinen parallelen Verschiebung des Umlenkspiegels verändert sich jedoch der Auftreffpunkt der optischen Achse auf dem Lichtempfänger mit der nachteiligen Folge, dass im Zentrum auf dem Lichtempfänger bei jeder Entfernungseinstellung eine andere Objektzone abgebildet wird.

Dieses Problem der veränderlichen Objektzone im Zentrum auf dem Lichtempfänger tritt jedoch nicht auf, wenn der verstellbare Umlenkspiegel nicht nur parallel verschoben wird, sondern stattdessen gekippt wird und dabei gleichzeitig in seinem Abstand zur Abbildungsoptik verändert wird. Auf diese Weise ist es möglich, dass die optische Achse und damit das gleiche Bildzentrum im Zentrum auf dem Lichtempfänger verbleibt, d. h. auch bei unterschiedlichen Entfernungseinstellungen wird keine andere Objektzone im Zentrum auf dem Lichtempfänger abgebildet.

Dieser Vorteil der konstanten Blickrichtung auch bei unveränderter Entfernungseinstellung wird nach der US 6,801,260 jedoch nur durch eine Verschlechterung der Abbildungsqualität erreicht. Der Grund dafür liegt darin, dass mit dem Verschwenken des Umlenkspiegels die optische Achse des Empfangslichtbündels nicht mehr optimal auf den ortsauflösenden Lichtempfänger auftrifft. Die unter dem Begriff der "Scheimpflug-Regel" aufgestellte Forderung über die Ausrichtung der Bild-, Objekt- und Abbildungsebene ist dabei innerhalb des Entfernungseinstellungsbereiches nicht mehr erfüllt, mit der Folge, dass Abbildungsfehler (Verzerrungen) entstehen.

Derartige Abbildungsfehler reduzieren die Ortsauflösung der Identifikationseinrichtungen und sind deshalb unerwünscht.

Der Erfindung liegt die Aufgabe zugrunde, eine Identifikationseinrichtung mit automatischer Entfernungseinstellung zu schaffen, die zur optimalen Identifikation von Objekten in der Lage ist, eine Entfernungsanpassung zu realisieren, die kostengünstig herstellbar ist, schnell sowie verschleißfrei auf unterschiedliche Objektabstände reagieren kann und dabei auftretende optische Abbildungsfehler möglichst gut korrigiert.

Erfindungsgemäß wird diese Aufgabe mit den Merkmalen gemäß Anspruch 1 gelöst.

Zweckmäßige Ausgestaltungen und Weiterbildungen sind in den Unteransprüchen charakterisiert.

Zur Lösung dieser Entfernungseinstellung sieht die Erfindung vor, dass die Identifikationseinrichtung in einem Gehäuse einen ortsauflösenden Lichtempfänger hat, dem eine ebenfalls im Gehäuse angeordnete Abbildungsoptik zugeordnet ist. Zwischen der Abbildungsoptik und dem Lichtempfänger ist ein Umlenkspiegel angeordnet. Der Umlenkspiegel ist über einen Schwenkarm in einer am Gehäuse angebrachten Drehachse gelagert, so dass bei Drehung des Schwenkarmes über eine Orts- und Winkelveränderung die wirksame optische Bildschnittweite verändert wird. Erfindungsgemäß ist dabei der ortsauflösende Lichtempfänger derart mit dem Schwenkarm verbunden, dass bei Drehung des Schwenkarmes die lichtempfindliche Oberfläche des ortsauflösenden Lichtempfängers ebenfalls eine Winkel- und Positionsveränderung durchführt. Auf diese Weise wird erreicht, dass auch bei veränderter Bildschnittweite durch Drehung des Schwenkarmes die optische Achse möglichst im Zentrum des Lichtempfängers verbleibt. Gleichzeitig wird der Lichtempfänger derart verkippt, dass die Oberfläche des Lichtempfängers annähernd rechtwinklig zur optischen Achse des einfallenden Lichtbündels ist, wodurch z. B. Verzerrungen in der Abbildung des Objektes auf den Lichtempfänger vermieden werden. Es ist nach der Erfindung weiterhin möglich, dass der Winkel zwischen der Oberfläche des Lichtempfängers und der optischen Achse des einfallenden Lichtes, in Abhängigkeit von der Drehung des Schwenkarmes einen definierten, vom rechten Winkel abweichenden Verlauf einnehmen kann. Dies ist dann von Vorteil, wenn Objekte abgebildet werden müssen, deren Objektebene ebenfalls eine definierte, vom rechten Winkel abweichende Ausrichtung, zur optischen Achse aufweisen.

In einer vorteilhaften Ausbildung ist vorgesehen, dass der Lichtempfänger auf einem Grundträger aufgebracht ist und dass dieser Grundträger an einem Ende in einer am Gehäuse angebrachten Drehachse gelagert ist, während das bewegliche Ende des Grundträgers mit dem Schwenkarm kraft- oder formschlüssig verbunden ist. Erfindungsgemäß wird dadurch erreicht, dass die räumliche Veränderung des Lichtempfängers einer eigenständigen Bewegungsablaufbahn folgen kann, die jedoch in einem festen Zusammenhang mit der Bewegung des Schwenkarmes steht.

In einer vorteilhaften Ausbildung ist vorgesehen, dass die kraft- oder formschlüssige Verbindung durch ein mechanisches Koppelglied ausgeführt ist. Das mechanische Koppelglied ist auf einer Seite über ein Drehlager mit dem Grundträger und auf der anderen Seite ebenfalls mit einem Drehlager mit dem Schwenkarm verbunden. Über die Länge des Koppelgliedes und über die Anordnung der Drehlager auf dem Grundkörper bzw. dem Schwenkarm kann erfindungsgemäß die Bewegungsablaufbahn des Lichtempfängers relativ zur Drehbewegung des Schwenkarmes festgelegt werden.

Da die beiden Drehlager zur Verbindung des Koppelgliedes mit dem Grundträger und dem Schwenkarm nur innerhalb eines begrenzten Drehwinkelbereichs betrieben werden, können die Drehlager durch ein flaches, flexibles Federband ersetzt werden. Damit ist eine sehr gut definierte, spielfreie Drehlagerfunktion gegeben, die auch über längere Zeiträume hinweg eine stabile, verschleißfreie Drehbewegung sicherstellt und darüber hinaus eine Wärmeleitung zwischen dem Grundträger und dem Gehäuse gewährleistet.

Erfindungsgemäß ist es auch vorgesehen, dass der Grundkörper gleichzeitig eine Leiterplatte ist, auf welcher der Lichtempfängers und ggf. noch weitere elektronische Bauelemente aufgebracht sind. Insbesondere dann, wenn der Verschwenkwinkel für den Lichtempfänger gering ist, kann die Leiterplatte aufgrund ihrer Materialeigenschaft auch die Funktion des Federbandes übernehmen. Der Grundträger kann aber auch eine Verbundleiterplatte sein, die einen starren, nicht biegbaren Leiterpiattenbereich aufweist, an den sich ein Fiexprintbereich anschließt. Auf dem starren Leiterplattenbereich sind der ortsauflösende Lichtempfänger und gegebenenfalls weitere elektronische Komponenten angeordnet, während der flexible Bereich Mittel zur Übertragung der elektrischen Versorgungs- und Signalleitungen beinhaltet und dabei gleichzeitig die Funktion des Federbandes, entsprechend der bereits beschriebenen Lagerung, bewerkstelligt. Mit dieser erfindungsgemäßen Ausführungsform kann der Grundkörper inklusive der Drehlagerung sehr kostengünstig hergestellt werden.

In einer weiteren Ausführungsform der Erfindung ist es vorgesehen, dass am Grundträger eine Konturfläche angebracht ist und dass mittels einer Vorspannkraft der Grundträger auf eine am Schwenkarm angebrachte mit der Konturfläche am Grundkörper zusammenwirkende Kontaktfläche angepresst wird. Über die Formgebung der Konturfläche bzw. der Kontaktfläche ist es dabei ebenfalls möglich, die Bewegungsablaufbahn des Lichtempfängers relativ zur Drehbewegung des Schwenkarmes festzulegen. Selbstverständlich ist es nach der Erfindung auch möglich, dass die Konturfläche am Schwenkarm angebracht ist und die Kontaktfläche am Grundträger befestigt ist. Insbesondere dann, wenn der Schwenkarm und/oder der Grundkörper in einem formgebenden Werkzeug hergestellt werden, kann die Konturfläche und/oder die Kontaktfläche direkt erzeugt werden, so dass diese Ausführungsform gegenüber der Variante mit dem mechanischen Koppelglied deutliche Vorteile bei den Herstellkosten aufweist.

Im Hinblick auf die Forderung nach einer schnellen und verschleißfreien Entfernungseinstellung ist es nach der Erfindung besonders vorteilhaft, dass nur eine mechanische Stellgröße für die Bewegung des Schwenkarmes und des Grundkörpers, d. h. mit dem Lichtempfänger, notwendig ist. Dies bedeutet, dass der zur Entfernungseinstellung notwendige Aufwand platzsparend und preiswert herstellbar ist.

Weitere Ausführungsformen der Erfindung sind in den Unteransprüchen genannt.

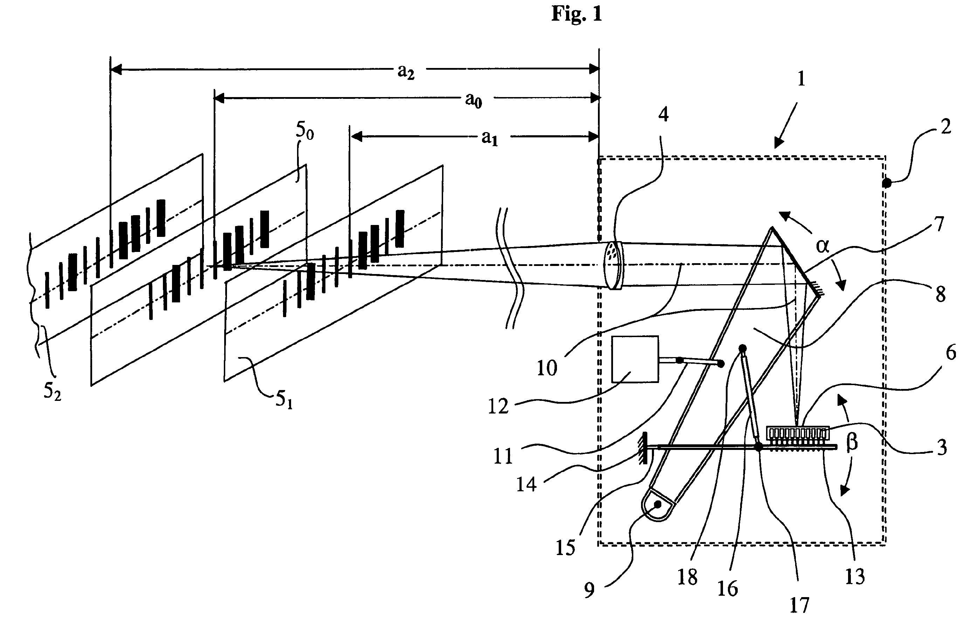

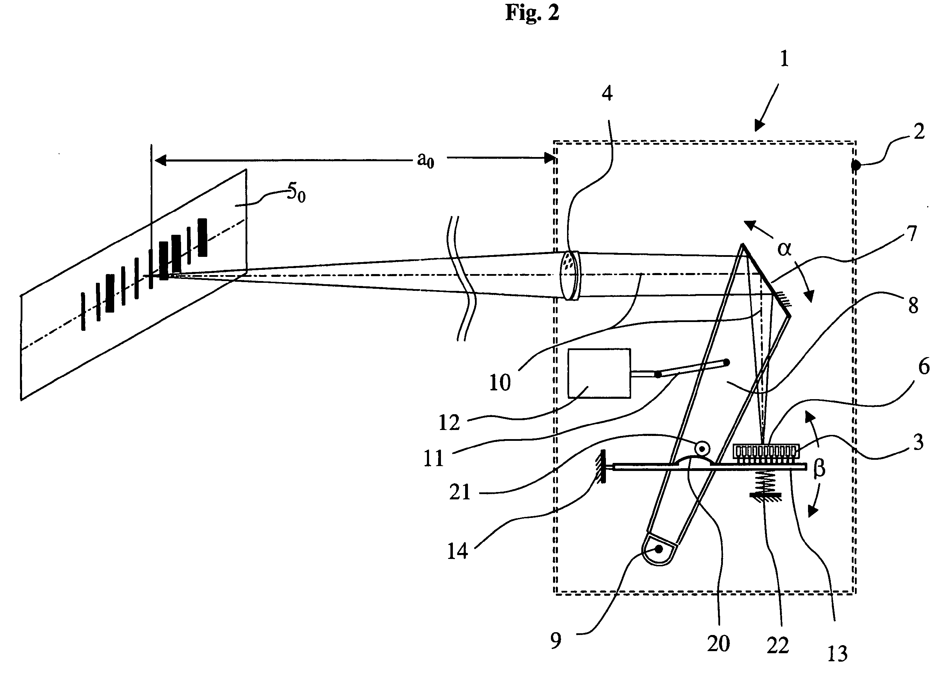

Die Erfindung wird im Folgenden beispielhaft unter Bezugnahme auf die Figuren 1 und 2 erläutert, in denen jeweils eine schematische Seitenansicht einer Ausführungsform einer erfindungsgemäßen Identifikationseinrichtung mit einer Entfernungseinstellung gezeigt ist.

### Dabei zeigt im Einzelnen:

- **Fig. 1**: Die Verbindung des Schwenkarmes mit dem Grundkörper über ein mechanisches Koppelglied.
- **Fig. 2**: Die Verbindung des Schwenkarmes mit dem Grundkörper über eine Konturfläche und einer damit zusammenwirkenden Kontaktfläche.

In Fig. 1 ist die Identifikationseinrichtung als Codeleser 1 beispielhaft dargestellt. Der Codeleser 1 besitzt in einem Gehäuse 2 einen ortsauflösenden Lichtempfänger 3. Dieser ortsauflösende Lichtempfänger 3 kann bei der Erfassung eines eindimensionalen Codes beispielsweise als eine CCD-Linie oder CMOS-Linie ausgebildet sein. Beim Einsatz des Codelesers zur Erfassung von zweidimensionalen Informationen ist der ortsauflösende Lichtempfänger 3 dann beispielsweise eine CCD-Fläche oder eine CMOS-Fläche.

Ebenfalls im Gehäuse 2 ist eine Abbildungsoptik eingebaut, die ein Abbild von einem Objekt 5₀ auf der Oberfläche 6 des ortsauflösenden Lichtempfängers 3 entwi rft.
Abhängig von der Einsatzbedingung und der jeweiligen Aufgabenstellung des Codelesers wird das Objekte 5₀ zusätzlich von einer in der Fig. 1 nicht dargestellten Beleuchtungseinrichtung ausgeleuchtet. Diese Beleuchtungseinrichtung, die mit einer oder mehreren Lichtquellen ausgestattet ist, kann entweder im Codeleser 1 integriert sein oder ist als eine eigenständige externe Beleuchtungseinheit ausgeführt.

Zwischen der Abbildungsoptik 4 und dem Lichtempfänger 3 ist auf einer optischen Achse 10 ein Umlenkspiegel 7 angeordnet. Der Umlenkspiegel 7 ist mit einem Schwenkarm 8 in einer am Gehäuse 2 angebrachten Drehachse 9 gelagert. Der in Fig. 1 dargestellte Umlenkspiegel 7 ist um ca. 45° zum einfallenden Lichtstrahl schräggestellt. Der Umlenkspiegel 7 lenkt die einfallende Strahlrichtung um ca. 90° in Richtung zu dem Lichtempfänger 3 um. Entsprechend den optischen Abbildungsbedingungen erzeugt die Abbildungsoptik 4 von einem Objekt 5₀, das sich in einem definierten Objektabstand a₀ vor der Identifikationseinrichtung 1 befindet, auf der Oberfläche 6 des Lichtempfängers 3, die sich in der entsprechenden Bildweite hinter der Abbildungsoptik 4 befindet, ein Abbild.

Verändert sich der Objektabstand von a₀ zu a₁ bzw. a₂, muss der Schwenkarm 8 in der Drehachse 9 um einen Winkel α verschwenkt werden, um wieder ein exaktes Abbild der Objekte 5₁ bzw. 5₂ auf der Oberfläche 6 des ortsauflösenden Lichtempfängers 3 zu entwerfen.

Zur Bewegung des Schwenkarmes 8 ist im Gehäuse 2 ein linearer Aktor 12 vorhanden, der über eine bewegliche Schubstange 11 mit dem Schwenkarm 8 verbunden ist. Der Aktor 12 ist somit in der Lage, den Schwenkarm 8 und damit den Umlenkspiegel um die Drehachse 9 zu verschwenken. Neben dem in Fig.1 symbolisch dargestellten Aktor 12 sind auch weitere Aktoren zur Bewegung des Schwenkarmes möglich. So kann zum Beispiel an der Drehachse 9 ein zirkularer Aktor in Form eines Schrittmotors angeordnet werden. Grundsätzlich sind für die Bewegung des Schwenkarmes auch Magnettauchspulen, Pneumatik-/Hydraulikzylinder usw. denkbar. Wie Fig. 1 weiter zeigt, ist der Lichtempfänger 3 auf einer Seite eines Grundkörpers 13 aufgebracht. Die andere Seite des Grundkörpers 13 ist über ein Lager 14 im Gehäuse 2 arretiert. Wie in Fig. 1 beispielhaft dargestellt, ist zu diesem Zweck der Grundkörper 13 über ein Federband 15 mit dem Lager 14 verbunden.

In einer besonderen Ausführungsform kann dabei der Grundkörper 13 direkt eine Leiterplatte sein, auf der neben dem Lichtempfänger 3 noch weitere in Fig.1 nicht dargestellte elektronische Bauelemente aufgebracht sind. Die Funktion des Federbandes 15 kann dabei von der Leiterplatte selbst oder einem sich an den starren Leiterplattenbereich anschließenden Flexprintbereich, der gleichzeitig Mittel zur Übertragung der elektrischen Versorgungs- und Signalleitungen beinhaltet, ausgeführt werden.

Über ein mechanisches Koppelglied 16 ist der Grundkörper 13 auch mit dem Schwenkarm 8 verbunden. Diese Verbindung ist, wie in Fig. 1 dargestellt, durch zwei Drehlager 17 und 18 realisiert. Auch hier ist es natürlich möglich, dass diese Lagerungen analog der zuvor beschriebenen Ausführungsform durch ein beidseitig eingespanntes Federband realisiert sind. Wird der Schwenkarm 8, wie oben beschrieben, wegen eines veränderten Objektabstandes geschwenkt, so bewegt sich der Lichtempfänger 3 auf einer Kreisbahn um das Lager 14, wobei sich die Oberfläche 6 des Lichtempfängers 3 um einen Winkel β verändert. In Abhängigkeit von der räumlichen Anordnung der Lager 9 und 14 sowie von der Dimensionierung und Positionierung des mechanischen Koppelglieds 16 wird erreicht, dass die optische Achse 10 auch bei verschiedenen Stellungen des Umlenkspiegels 7 immer nahezu senkrecht bzw. unter einem definierten Winkel und möglichst mittig auf den Lichtempfänger 3 auftrifft.

Bei der in Fig. 2 dargestellten Identifikationseinrichtung ist die kraftschlüssige Verbindung des Grundkörpers 13 mit dem Schwenkarm 8 derart ausgeführt, dass am Grundkörper 13 eine Konturfläche 20 angebracht ist, welche mit einer am Schwenkarm 8 vorhandenen Kontaktfläche 21 zusammenwirkt. Diese Kontaktfläche 21 kann dabei verschiedene Ausführungsformen aufweisen, wie zum Beispiel die Form eines Zapfens oder eines Drehlagers. Damit die Konturfläche 20 immer spielfrei an der entsprechenden Kontaktfläche 21 anliegt, ist eine auf den Grundkörper 13 einwirkende vorgespannte Druckfeder 22 vorhanden. Selbstverständlich ist es nach der Erfindung auch möglich, dass die Konturfläche 20 am Schwenkarm 8 angebracht ist und die Kontaktfläche 21 am Grundträger befestigt ist. Über die Formgebung der Konturfläche 20 bzw. der Kontaktfläche 21 sowie über die Positionierung derselben sowohl auf dem Schwenkarm 8 als auch auf dem Grundkörper 13 ist es dabei möglich, die Bewegungsablaufbahn des Lichtempfängers relativ zur Drehbewegung des Schwenkarmes festzulegen. Auch hiermit ist es möglich, die Bewegungsablaufbahn des Lichtempfängers 3 vorzugeben, d. h. einen rechtwinkligen oder einen definiert davon abweichenden Winkel zur optischen Achse 10 herzustellen. Damit ist es ebenfalls möglich, die für eine optimale Abbildung erforderlichen geometrischen Veränderungen am Umlenkspiegel 7 und am Lichtempfänger 3 in Abhängigkeit vom jeweiligen Objektabstand a₀ bereit zu stellen.

## Patentansprüche

1. Identifikationseinrichtung, insbesondere zur Erfassung von in unterschiedlichem Abstand angeordneten ein- und/oder zweidimensionalen Codes mit einem in einem Gehäuse (2) angeordneten ortsauflösenden Lichtempfänger (3) einer diesem zugeordneten ebenfalls im Gehäuse (2) angeordneten Abbildungsoptik (4) sowie einer auf einer optischen Achse (10) zwischen dem Lichtempfänger (3) und der Abbildungsoptik (4) angeordneten Umlenkspiegel (7), der über einen Schwenkarm (8) in einer am Gehäuse (2) angebrachten Drehachse (9) gelagert ist und bei Drehung über eine Orts- und Winkelveränderung die wirksame optische Bildschnittweite verändert, **dadurch gekennzeichnet, dass** der ortsauflösende Lichtempfänger (3) derart mit dem Schwenkarm (8) verbunden ist, dass bei Drehung des Schwenkarmes (8) die lichtempfindliche Oberfläche (6) des ortsauflösenden Lichtempfängers (3) eine Winkel- und Positionsveränderung durchführt.

2. Identifikationseinrichtung nach Anspruch 1, **dadurch gekennzeichnet, dass** der ortsauflösende Lichtempfänger (3) auf einem Grundträger (13) aufgebracht ist und dass der Grundträger (13) an einem Ende in einer am Gehäuse (2) angebrachten Drehachse (14) gelagert ist, während das bewegliche Ende des Grundträgers (13) mit dem Schwenkarm (8) verbunden ist.

3. Identifikationseinrichtung nach Anspruch 2, **dadurch gekennzeichnet, dass** die Verbindung durch ein mechanisches Koppelglied (16) ausgeführt ist.

4. Identifikationseinrichtung nach Anspruch 3, **dadurch gekennzeichnet, dass** das mechanische Koppelglied (16) den Grundträger (13) mit dem Schwenkarm (8) an zwei Drehlagern (17) und (18) verbindet.

5. Identifikationseinrichtung nach Anspruch 4, **dadurch gekennzeichnet, dass** die beiden Drehlager (17) und (18) aus mindestens einem flachen, flexiblen Federband bestehen, welches ein Ende des mechanischen Koppelglieds (16) mit dem Grundträger (13) verbindet und das andere Ende des mechanischen Koppelglieds (16) mit dem Schwenkarm (8) verbindet.

6. Identifikationseinrichtung nach Anspruch 2, **dadurch gekennzeichnet, dass** am Grundträger (13) eine Konturfläche (20) angebracht ist und dass mittels einer Vorspannkraft der Grundträger (13) auf eine am Schwenkarm angebrachte mit der Konturfläche (20) am Grundkörper (13) zusammenwirkende Kontaktfläche (21) anpresst wird.

7. Identifikationseinrichtung nach Anspruch 2 und 6, **dadurch gekennzeichnet, dass** der Grundträger (13) eine Leiterplatte ist, die den ortsauflösenden Lichtempfänger (3) und gegebenenfalls weitere elektronische Komponenten trägt und dabei gleichzeitig die Funktion eines Federbandes bewerkstelligt.

8. Identifikationseinrichtung nach Anspruch 2 und 6, **dadurch gekennzeichnet, dass** der Grundträger (13) eine Verbundleiterplatte ist, mit einem ersten nicht biegbaren Leiterplattenbereich, die den ortsauflösenden Lichtempfänger (3) und gegebenenfalls weitere elektronische Komponenten trägt und daran angeschlossen einen zweiten Flexprintbereich aufweist, der Mittel zur Übertragung der elektrischen Versorgungs- und Signalleitungen beinhaltet und dabei gleichzeitig die Funktion eines Federbandes bewerkstelligt.

9. Identifikationseinrichtung nach einem der vorhergehenden Ansprüche, **dadurch gekennzeichnet, dass** beim Verdrehen des Schwenkarmes (8) die lichtempfindliche Oberfläche (6) des ortsauflösenden Lichtempfängers (3) nahezu immer rechtwinklig zur optischen Achse (10) des einfallenden Lichtes ausgerichtet ist.

10. Identifikationseinrichtung nach einem der vorhergehenden Ansprüche 1 bis 8, **dadurch gekennzeichnet, dass** beim Verdrehen des Schwenkarmes (8) die lichtempfindliche Oberfläche (6) des ortsauflösenden Lichtempfängers (3) im Bezug zur optischen Achse (10) des einfallenden Lichtes einen definierten, vom rechten Winkel abweichenden, Winkelbezug aufweist.

11. Identifikationseinrichtung nach einem der vorhergehenden Ansprüche, **dadurch gekennzeichnet, dass** beim Verdrehen des Schwenkarmes (8) die optische Achse (10) des einfallenden Lichtes nahezu immer auf das Zentrum der lichtempfindlichen Oberfläche des ortsauflösenden Lichtempfängers (3) auftrifft.

12. Identifikationseinrichtung nach einem der vorhergehenden Ansprüche, **dadurch gekennzeichnet, dass** der Umlenkspiegel (7) eine lichtsammelnde oder lichtstreuende optische Wirkung hat.

13. Identifikationseinrichtung nach einem der vorhergehenden Ansprüche, **dadurch gekennzeichnet, dass** der Umlenkspiegel (7) innerhalb der Abbildungsoptik angeordnet ist.

14. Identifikationseinrichtung nach einem der vorhergehenden Ansprüche, **dadurch gekennzeichnet, dass** das Drehgelenk (9) des Schwenkarmes (8) mindestens ein flaches, flexibles Federband aufweist, welches mit seinen beiden Enden mit den gegeneinander zu verdrehenden Teilen verbunden ist.

15. Identifikationseinrichtung nach einem der vorhergehenden Ansprüche, **dadurch gekennzeichnet, dass** die mechanische Stellgröße zur Bewegung des Schwenkarmes (8) und des Grundträgers (13) von einem linearen oder zirkularen Aktor (12) auslösbar ist.

## Claims

1. Identification apparatus, in particular for reading one- and/or two-dimensional codes located at varying distances, with a spatially resolving light receiver (3), arranged in a housing (2), an imaging optics (4) which is assigned thereto and is likewise arranged in the housing (2), and a deflection mirror (7) which is mounted on an optical axis (10) between the light receiver (3) and the imaging optics (4) via a pivot arm (8) in a pivot axis (9) arranged on the housing (2) and changes the effective optical back focal length via a spatial and angular change by pivoting the pivot arm, **characterized in that** the spatially resolving light receiver (3) is connected to the pivot arm (8) such that, when the pivot arm (8) is pivoted, the light-sensitive surface (6) of the spatially resolving light receiver (3) changes the angle and position.

2. Identification apparatus according to Claim 1, **characterized in that** the spatially resolving light receiver (3) is mounted on a base carrier (13) and **in that** the base carrier (13) is mounted on one end in a pivot axis (14) located on the housing (2), while the movable end of the base carrier (13) is connected to the pivot arm (8).

3. Identification apparatus according to Claim 2, **characterized in that** the connection is achieved by a mechanical coupler (16).

4. Identification apparatus according to Claim 3, **characterized in that** the mechanical coupler (16) connects the base carrier (13) to the pivot arm (8) on two pivoting bearings (17) and (18).

5. Identification apparatus according to Claim 4, **characterized in that** the two pivoting bearings (17) and (18) comprise at least one flat, flexible spring band, which connects one end of the mechanical coupler (16) to the base carrier (13) and the other end of the mechanical coupler (16) to the pivot arm (8).

6. Identification apparatus according to Claim 2, **characterized in that** a contour surface (20) is arranged on the base carrier (13) and **in that** the base carrier (13) is pressed against a contact surface (21) which is arranged on the pivot arm and interacts with the contour surface (20) on the base body (13) via a prestressing force of the base carrier (13).

7. Identification apparatus according to Claims 2 and 6, **characterized in that** the base carrier (13) comprises a circuit board which mounts the spatially resolving light receiver (3) and, if needed, further electronic components and at the same time carries out the function of a spring band.

8. Identification apparatus according to Claims 2 and 6, **characterized in that** the base carrier (13) comprises a composite circuit board, having a first non-bendable circuit board region, which mounts the spatially resolving light receiver (3) and, if needed, further electronic components and has, connected thereto, a second flexible printed circuit region comprising means for transmitting the electric supply and signal lines and at the same time carrying out the function of a spring band.

9. Identification apparatus according to one of the preceding claims, **characterized in that**, when the pivot arm (8) is pivoted, the light-sensitive surface (6) of the spatially resolving light receiver (3) is nearly always oriented at right angles to the optical axis (10) of the incoming light.

10. Identification apparatus according to one of the preceding Claims 1 to 8, **characterized in that**, when the pivot arm (8) is pivoted, the light-sensitive surface (6) of the spatially resolving light receiver (3) has a defined angular relationship which deviates from a right angle relative to the optical axis (10) of the incoming light.

11. Identification apparatus according to one of the preceding claims, **characterized in that**, when the pivot arm (8) is pivoted, the optical axis (10) of the incoming light nearly always strikes at the centre of the light-sensitive surface of the spatially resolving light receiver (3).

12. Identification apparatus according to one of the preceding claims, **characterized in that** the deflection mirror (7) has a light converging or a light scattering optical effect.

13. Identification apparatus according to one of the preceding claims, **characterized in that** the deflection mirror (7) is arranged within the imaging optics.

14. Identification apparatus according to one of the preceding claims, **characterized in that** the pivot joint (9) of the pivot arm (8) comprises at least one flat, flexible spring band which is connected by its two ends to the parts to be rotated relative to one another.

15. Identification apparatus according to one of the preceding claims, **characterized in that** the mechanical parameter for moving the pivot arm (8) and the base carrier (13) can be triggered by a linear or circular actuator (12).

## Revendications

1. Dispositif d'identification, destiné notamment à la saisie de codes à une et/ou à deux dimensions positionnés à différentes distances, comportant un récepteur de lumière (3) à résolution locale disposé dans un boîtier (2), une optique de reproduction (4) associée à celui-ci, également disposée dans le boîtier (2), ainsi qu'un miroir de déviation (7) disposé sur un axe optique (10) entre le récepteur de lumière (3) et l'optique de reproduction (4), lequel est monté dans un axe de rotation (9) fixé sur le boîtier (2) par l'intermédiaire d'un bras pivotant (8) et qui, lors d'une rotation, modifie le tirage optique efficace par l'intermédiaire d'une modification locale et angulaire, **caractérisé en ce que** le récepteur de lumière (3) à résolution locale est relié au bras pivotant (8) de telle sorte que, lors d'une rotation du bras pivotant (8), la surface (6) photosensible du récepteur de lumière (3) à résolution locale effectue une modification d'angle et de position.

2. Dispositif d'identification selon la revendication 1, **caractérisé en ce que** le récepteur de lumière (3) à résolution locale est fixé sur un support de base (13), et **en ce que** le support de base (13) est monté par une extrémité dans un axe de rotation (14) fixé sur le boîtier (2), alors que l'extrémité mobile du support de base (13) est reliée au bras pivotant (8).

3. Dispositif d'identification selon la revendication 2, **caractérisé en ce que** la liaison est réalisée par un organe de couplage mécanique (16).

4. Dispositif d'identification selon la revendication 3, **caractérisé en ce que** l'organe de couplage mécanique (16) relie le support de base (13) au bras pivotant (8) au niveau de deux paliers pivotants (17) et (18).

5. Dispositif d'identification selon la revendication 4, **caractérisé en ce que** les deux paliers pivotants (17) et (18) sont constitués d'au moins une bande à ressort flexible plate, qui relie une extrémité de l'organe de couplage mécanique (16) au support de base (13), et l'autre extrémité de l'organe de couplage mécanique (16) au bras pivotant (8).

6. Dispositif d'identification selon la revendication 2, **caractérisé en ce qu'**une surface de contour (20) est prévue sur le support de base (13), et **en ce que**, au moyen d'une force de précontrainte, le support de base (13) est appliqué contre une surface de contact (21) prévue sur le bras pivotant, qui agit conjointement avec la surface de contour (20) du corps de base (13).

7. Dispositif d'identification selon les revendications 2 et 6, **caractérisé en ce que** le support de base (13) est une plaquette de circuits imprimés qui porte le récepteur de lumière (3) à résolution locale, et le cas échéant d'autres composants électroniques, et qui assure en l'occurrence simultanément la fonction d'une bande à ressort.

8. Dispositif d'identification selon les revendications 2 et 6, **caractérisé en ce que** le support de base (13) est une plaquette de circuits imprimés composite avec une première zone non flexible de plaquette de circuits imprimés, qui porte le récepteur de lumière (3) à résolution locale, et le cas échéant d'autres composants électroniques, et une deuxième zone imprimée flexible s'y raccordant, qui comporte des moyens pour la transmission des lignes d'alimentation électrique et de signalisation, et assure en l'occurrence simultanément la fonction d'une bande à ressort.

9. Dispositif d'identification selon l'une des revendications précédentes, **caractérisé en ce que**, lors de la rotation du bras pivotant (8), la surface photosensible (6) du récepteur de lumière (3) à résolution locale est pratiquement toujours orientée à angle droit par rapport à l'axe optique (10) de la lumière incidente.

10. Dispositif d'identification selon l'une des revendications précédentes 1 à 8, **caractérisé en ce que**, lors de la rotation du bras pivotant (8), la surface photosensible (6) du récepteur de lumière (3) à résolution locale est positionnée à une référence angulaire définie s'écartant de l'angle droit par rapport à l'axe optique (10) de la lumière incidente.

11. Dispositif d'identification selon l'une des revendications précédentes, **caractérisé en ce que**, lors de la rotation du bras pivotant (8), l'axe optique (10) de la lumière incidente arrive pratiquement toujours sur le centre de la surface photosensible du récepteur de lumière (3) à résolution locale.

12. Dispositif d'identification selon l'une des revendications précédentes, **caractérisé en ce que** le miroir de déviation (7) a un effet optique de focalisation de lumière ou de dispersion de lumière.

13. Dispositif d'identification selon l'une des revendications précédentes, **caractérisé en ce que** le miroir de déviation (7) est disposé dans l'optique de reproduction.

14. Dispositif d'identification selon l'une des revendications précédentes, **caractérisé en ce que** l'articulation à charnière (9) du bras pivotant (8) comporte au moins une bande à ressort flexible plate, dont les deux extrémités sont reliées aux parties à pivoter les unes par rapport aux autres.

15. Dispositif d'identification selon l'une des revendications précédentes, **caractérisé en ce que** la grandeur de réglage mécanique pour le mouvement du bras pivotant (8) et du support de base (13) peut être déclenchée par un actionneur linéaire ou circulaire (12).
